# EUROPÄISCHE PATENTSCHRIFT

(11) **EP 0 450 158 B1**
(45) Veröffentlichungstag und Bekanntmachung des Hinweises auf die Patenterteilung: **16.02.1994**
(21) Anmeldenummer: 90122709.0
(22) Anmeldetag: 28.11.1990
(51) Int. Cl.: E21D 21/02, F16B 31/02

(54) **An Ankern, insbesondere Injektionsankern für den Bergbau oder dergleichen anzuordnende Kontrollmutterverschraubung mit Belastungsanzeigevorrichtung**
Controlled threaded fastener with load indication device for use with rock bolts, in particular with injection rock bolts for mining or the like
Ecrou de contrôle avec dispositif indicateur de tension pour boulons d'ancrage, notamment pour boulons d'injection dans le domaine des mines ou domaines semblables

(30) Priorität: 31.03.1990 DE 4010476
(43) Veröffentlichungstag der Anmeldung: 09.10.1991
(73) Patentinhaber: Friedr. Ischebeck GmbH, D-58256 Ennepetal (DE)
(72) Erfinder:
(74) Vertreter: Rieder, Hans-Joachim, Dr.

(56) Entgegenhaltungen:
- DE-A- 3 726 098
- DE-C- 1 214 022
- US-A- 3 306 154

## Beschreibung

Die Erfindung betrifft eine an Ankern, insbesondere Injektionsankern für den Bergbau oder dergleichen, anzuordnende Kontrollmutterverschraubung mit Belastungsanzeigevorrichtung gemäß Gattungsbegriff des Anspruchs 1.

Eine derartige Kontrollmutterverschraubung ist aus der DE-A-37 26 098 bekannt, wobei auf einen Anker eine zweiteilige Sechskantmutter anstelle einer normalen Verankerungsmutter aufgeschraubt ist. Diese Sechskantmutter setzt sich aus einer als Tragteil ausgebildeten Ankermutter und einem dem Auflager zugewandten Prüfteil zusammen. An der Außenwandung der Kontrollmutter sind Schlitze vorgesehen, die sich bei Überschreiten einer bestimmten Lastgrenze verschmälern und gegebenenfalls schließen, wobei die Mutterrippen des Prüfteils abscheren. Sobald der Schlitz geschlossen ist, steigt die Ankerkraft wieder steil an bis zur Bruchlast des Ankers. Der Gleitweg für den Anker, den die nachgebende Kontrollmutter freigibt, ist relativ klein und häufig nicht ausreichend für Gebirgsbewegungen oder dergleichen.

Aus der Patentschrift DE-C-12 14 022 ist eine Anordnung bekannt, bei der zwischen einer Tragplatte und einer Spannmutter ein oder mehrere Druckkörper angeordnet sind, welche bei Überschreiten einer bestimmten Lastgrenze zu Bruch gehen sollen. Auch hier erfolgt die Entspannung schlagartig.

Aus der US-A-33 06 154 ist eine Unterlegscheibe bekanntgeworden, die eine umlaufende Nut aufweist, und die als Anzugsdrehmomentindikator für eine Mutter/Bolzenverbindung dient.

Ausgehend von dem eingangs genannten Stand der Technik liegt der Erfindung die Aufgabe zugrunde, eine Kontrollmutterverschraubung mit Belastungsanzeige herstellungs- und handhabungstechnisch einfacher auszugestalten, insbesondere bei einer relativ geringen Bauhöhe einen ausreichend großen Gleitweg eines Ankers zu gewähren.

Gelöst ist dies durch die im Hauptanspruch angegebene Erfindung.

Die Unteransprüche stellen vorteilhafte Weiterbildung dar.

Zufolge dieser Ausgestaltung ist eine Kontrollmutterverschraubung mit Belastungsanzeigevorrichtung von erhöhtem Gebrauchs- und Sicherheitswert geschaffen. Hierbei ist vorgesehen, daß der Freiraum von mehreren je mit einem Faltboden ausgestatteten Nuten gebildet wird, die in der Mantelwand einer Mutter zugeordneten Büchse angeordnet sind. Die Büchse ist kontinuierlich verformbar und ermöglicht so einen Gleitweg des Ankers, welcher abhängig ist von der grade wirkenden Kraft. Auch ist ein relativ großer Verformweg gewährleistet. Dadurch, daß mehrere Nuten vorgesehen sind, bilden sich durch die von den Nutenzwischenräumen ausgebildeten Rippen Verstärkungen der Büchse. Ein gleichmäßiges Stauchen der Büchse ist die Folge. Eine durch Gebirgebewegung verursachte Ankerverlagerung wird durch die Deformierung der Büchse kompensiert. Darüber hinaus bildet die Büches einen Indikator, der momentanen, maximalen Ankerkraft des Ankers. Die aus Gebirgsbewegungen resultierenden Ankerkräfte werden über die Verankerungsmutter in die Büchse geleitet, wo sich die Nuten bei Überschreiten einer bestimmten Lastgrenze verschmälern und gegebenenfalls schließen. Dies geschieht in Form einer Stauchung im Bereich des Faltbodens der in der Mantelwand der Büchse angeordneten Nuten, wobei das gestauchte Material in den Freiraum zwischen Büchse und Ankeraußenfläche hineinwandern.

Wenn sich der Indikator deutlich sichtbar bei Überschreiten der zulässigen Ankerkraft zusammengestaucht hat, kann die Ankerkraft bis zur Bruchlast ansteigen. Die als Belastungsanzeigevorrichtung ausgebildete Büchse wird vorzugsweise aus einem aus feinkörnigem Baustahl ST.52 hergestellten und durch anschließende Wärmebehandlung normalisierten, nahtlosen Rohr gefertigt. Somit weist die Büchse sehr gleichmäßige Festigkeitseigenschaften über den gesamten Querschnitt auf. Es ist somit ein Indikator geschaffen, der Verspannungen und die zulässige Belastung des Ankers sichtbar anzeigt. Sobald die zulässige Ankerkraft überschritten ist, beginnt der Indikator gleichförmig zu fließen und gibt einen relativ großen Verformungsweg frei. Zur Stabilisierung gegen seitliches Ausweichen ist vorgesehen, daß die Büchse an ihren beiden Stirnenden jeweils mit einem Stützkragen ausgestattet ist. Diese Ausbildung verhilft zu einem planmäßigen, radial symmetrischen Stauchen und Falten. Im Bereich der Ankerplatte wird dies unterstützt, indem der Büchse eine Randverstärkung angeschweißt ist. Eine vorteilhafte Weiterbildung besteht darin, daß die Breite der Nut einem Vielfachen Ihrer Tiefe entspricht. Hierdurch ist ein planmäßiges Stauchen der Büchse gewährleistet, wobei die Breite der Nut in etwa dem Gleitweg des Ankers entspricht. Dieser Gleitweg kann auch vergrößert werden, indem mehrere reihenförmig, in gleichmäßigem Abstand zueinander angeordnete Nuten vorgesehen werden. Die zwischen den Nuten verbleibenden Rippen dienen hierbei als Stabilisierungsringe gegen Ausknicken der Büchse. Versuche haben ergeben, daß ein radial symmetrisches Stauchen dann gegeben ist, wenn Nutbreite zu Rippenbreite einem Verhältnis von 1,5 zu 1 entspricht, wobei die Nutbreite kleiner als 10 mm bleibt. Zur Anzeige von mehreren Belastungsstufen ist vorgesehen, daß der Faltwiderstand der einzelnen Faltböden zueinander unterschiedlich ist. Der Indikator zeigt somit mindestens zwei Laststufen zusätzlich zur Höchstlast an. So kann so vorgegangen sein, daß der Faltwiderstand der der Ankerplatte nächstgelegenden Nut am kleinsten ist, so daß bei einer bestimmten Vorspannung sich diese Nutbreite aufstaucht. Diese aufgestauchte Rille kann beispielsweise anzeigen, daß der Anker vermittels eines Schlagschraubers vorgespannt ist. Erst bei Überschreiten der zulässigen Ankerkraft stauchen sich die übrigen Nuten je nach Faltwiderstand auf. Der Indikator kann somit verschiedene, in Stauchversuchen definierte Belastungswerte anzeigen. Schließlich ist vorteilhafterweise der Faltwiderstand der einzelnen Faltböden derart ausgebildet, daß die Nuten unterschiedliche Tiefen aufweisen. Diese Rillentiefen, die für die einzelnen Laststufen erforderlich sind, können sehr einfach und genau hergestellt werden und durch Stauchversuche überprüft werden.

Weitere Vorteile und Einzelheiten der Erfindung sind nachstehend anhand eines zeichnerisch veranschaulichten Ausführungsbeispiels näher erläutert. Es zeigt:
- Fig. 1: eine erfindungsgemäße Belastungsanzeigevorrichtung in Seitenansicht,
- Fig. 2: eine Seitenansicht der Belastungsanzeigevorrichtung,
- Fig. 3: einen Längsschnitt durch die Belastungsanzeigevorrichtung gemäß Fig. 1,
- Fig. 4: einen mit einer Verankerungsmutter versehenen Injektionsanker, wobei der Verankerungsmutter die Belastungsanzeigevorrichtung zugeordnet ist,
- Fig. 5: eine der Fig. 4 entsprechende Darstellung, jedoch noch Stauchung einer den schwächsten Faltwiderstand aufweisenden Nut,
- Fig. 6: eine Folgedarstellung zu Fig. 5, jedoch bei Stauchung einer weiteren Nut und
- Fig. 7: eine weitere Folgedarstellung zu Fig. 6, wobei alle Nuten der Belastungsanzeigevorrichtung gestaucht sind.

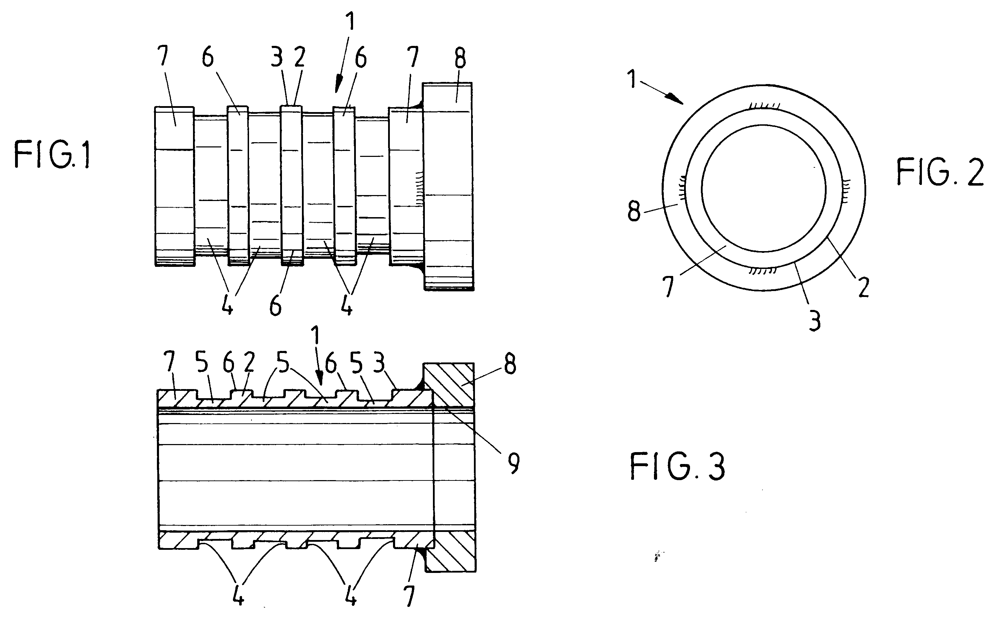

Die in Fig. 1 dargestellte Belastungsanzeigevorrichtung 1 ist aus einer nahtlosen Büchse 2 geformt. In der Mantelwand 3 der Büchse 2 sind vier reihenförmig, in gleichmäßigem Abstand zueinander angeordnete Nuten 4 vorgesehen. Diese Nuten 4 weisen unterschiedliche Nuttiefen auf, womit die als Rest-Ringquerschnitt verbleibenden Faltböden 5 unterschiedliche Faltwiderstände aufweisen. Die Nutbreite ist so bemessen, daß diese etwa dem 1,5-fachen der Breite der zwischen den Nuten 4 verbleibenden, als Stabilisierungsringe 6 ausgebildeten Stege der Büchse 2 entspricht. An ihren beiden Stirnenden ist die Büchse 2 jeweils mit einem Stützkragen 7 ausgestattet, der in etwa die doppelte Breite eines Stabilisierungsringes 6 besitzt. An dem Endbereich, in dem die Nut 4 mit der größten Nuttiefe, d. h. mit dem geringsten Faltwiderstand des Faltbodens 5, eingearbeitet ist, ist an der Büchse 2 stirnseitig eine Randverstärkung 8 angeschweißt. Diese Randverstärkung 8 ist dabei durchmessergrößer als die Büchse 2, besitzt jedoch eine Axialbohrung 9, deren Durchmesser dem Innendurchmesser der Büchse 2 entspricht.

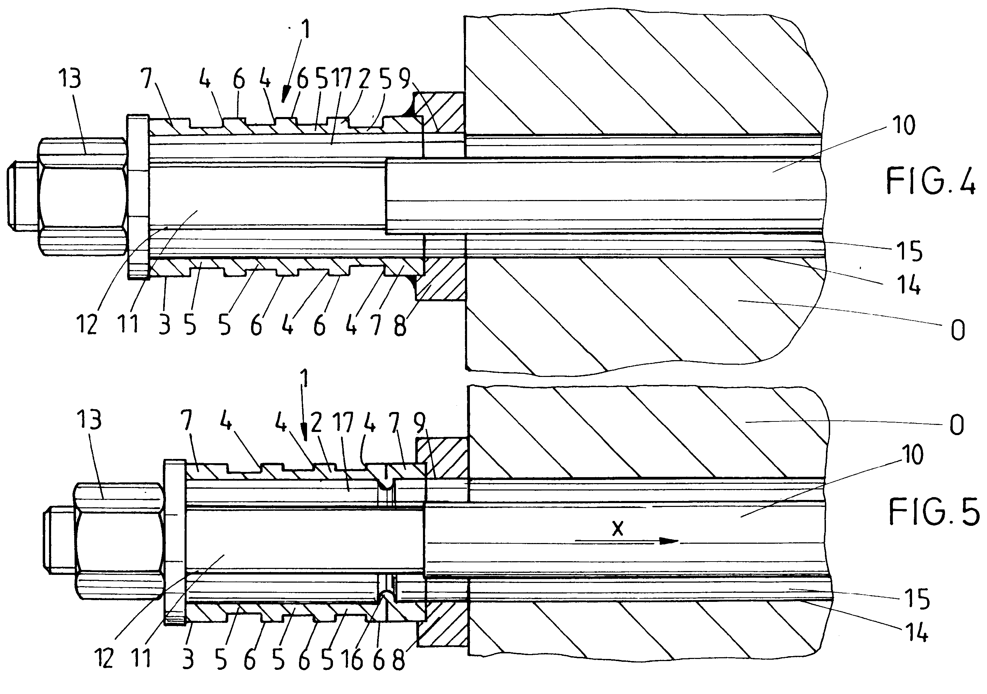

Die in Fig. 4 dargestellte Halterung besitzt ein Zugglied in Form eines Ankers 10. Es handelt sich in der Regel um hochfestes, stabförmiges Spannstahlmaterial. Der am Objekt O freistehende Ankerkopf 11 weist ein Außengewinde 12 auf. Letzteres wirkt mit dem Innengewinde der Verankerungsmutter 13 zusammen. Der eigentliche Ankerungsbereich, beispielsweise in einem Felsabschnitt eines Hanges oder dergleichen, ist nicht näher dargestellt. Das austrittsseitige Ende zeigt dagegen einen Abschnitt eines Bohrloches 14, welches konzentrisch um den Ankerquerschnitt einen freien Ringraum 15 beläßt. Dessen lichter Durchmesser wird so bemessen, daß zu erwartende Kluftverschiebungen senkrecht zum Anker 10 nicht zu einer Scherwirkung führen. Nach dem Setzen der Halterung und dem Abklingen der Gebirgsverformungen wird der Ringraum 15 in aller Regel mittels Zementmörtel gefüllt.

Zwischen der mit einer Unterlegscheibe versehenen Verankerungsmutter 13 und der Außenfläche des Objektes O ist die Belastungsanzeigevorrichtung 1 angeordnet. Die Büchse 2 der Belastungsanzeigevorrichtung 1 erstreckt sich hierbei mit Abstand zur Ankeraußenfläche und ist so angeordnet, daß die Randverstärkung 8 sich an der Außenfläche des Objektes O abstützt.

Die Faltbodendecke des Faltbodens 5 der der Randverstärkung 8 naheliegenden Nut 4 ist am dünnsten bemessen, was zur Folge hat, daß bei Überschreiten einer definierten Kraft in Richtung x diese Nut 4 aufgestaucht wird (vgl. Fig. 5). Durch dieses Schließen des Freiraumes (Nut 4) ist es somit von außen her ersichtlich, daß eine Kraft in x-Richtung wirkt. Die Kraft, die mittels des Schließens dieses Freiraumes angezeigt wird, ist zuvor in Stauchversuchen definiert worden. Es besteht auch die Möglichkeit diese Nut 4 als Kontrollanzeige für eine Vorspannung zu nutzen. Hierbei wird der Anker 10 vermittels eines an der Verankerungsmutter 13 angreifenden Schlagschraubers auf eine zuvor definierte Vorspannung gebracht, wobei der Kraftfluß ebenfalls in x-Richtung verläuft und somit ein Schließen der Nut 4 bewirkt. Der gestauchte Faltboden 5 der Nut 4 wuchert als Ringwulst 16 in den freien Ringraum 17 zwischen der Büchse 2 und der Ankerschaftaußenfläche.

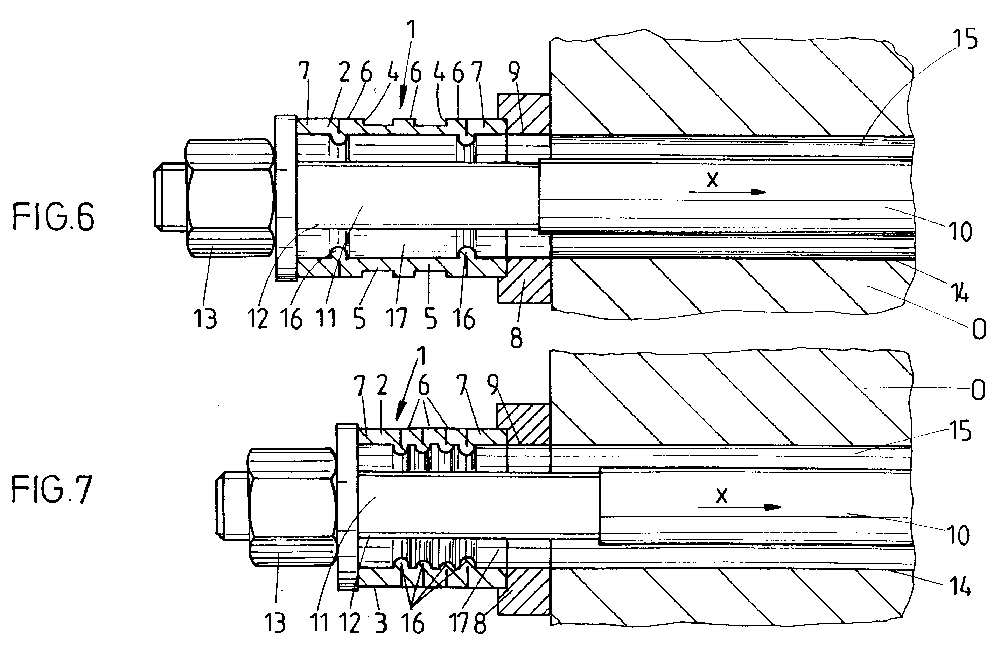

Bei Überschreiten einer weiteren definierten Ankerkraft in x-Richtung staucht sich die mit dem nächst dickeren Faltboden 5 versehene Nut 4 auf (vgl Fig. 6). Überschreitet die Ankerkraft in x-Richtung einen zulässigen Maximalwert, so ist dies daran zu erkennen, daß alle vier Nuten 4 aufgestaucht sind. Diese Anzeige ist von allen Seiten her sichtbar und auch von ungeschultem Personal zu erkennen. Wie aus Fig. 7 zu erkennen ist, besitzt die Belastungsanzeige 1 in diesem Zustand, bei der ein Überschreiten der zulässigen Ankerkraft vorliegt, eine nahezu ebene Oberfläche der Büchse 2. Dies ist ein Signal dafür, daß nunmehr die Ankerkraft bis zur Bruchlast ansteigen kann. Diese Signalwirkung kann zusätzlich noch dadurch unterstützt werden, daß die Mantelfläche der Büchse 2 in einer Signalfarbe gehalten wird. Beim Überschreiten der zulässigen Ankerkraft wirkt die auf den Stabilisierungsringen 6 und den Stützkragen 7 aufgebrachte Farbe als ein weiteres optisches Signal.

Bei der als Ausführungsbeispiel beschriebenen Belastungsanzeigevorrichtung 1 ist das Verhältnis zwischen Nutbreite und der Breite der Stabilisierungsringe mit einem Wert von ca. 1,5 zu 1 angegeben. Der Verformungsweg der Belastungsanzeigevorrichtung 1 entspricht in etwa der Hälfte der Bauhöhe der Belastungsanzeigevorrichtung 1. Es ist somit bei relativ geringer Bauhöhe ein ausreichend bemessener Gleitweg des Ankers 10 realisiert.

## Patentansprüche

1. An Ankern (10), insbesondere Injektionsankern für den Bergbau oder dergleichen, anzuordnende Kontrollmutterverschraubung mit Belastungsanzeigevorrichtung (1), welche aus mindestens einem an einer Mantelfäche (3) liegenden Freiraum besteht, der sich bei Überschreiten einer die zulässige Ankerkraft überschreitende Lastgrenze verschmälert und gegebenenfalls schließt, dadurch gekennzeichnet, daß der Freiraum von mehreren je mit einem Faltboden (5) ausgestatteten Nuten (4) gebildet ist, die in der Mantelwand (3) einer der Mutter (13) zugeordneten, sich mit Abstand zur Ankeraußenfläche erstreckenden Büchse (2) angeordnet sind, und die durch eine aus Gebirgsbewegung resultierende Kraft unter kontinuierlicher Verformung einen Gleitweg des Ankers ermöglichen.

2. Belastungsanzeigevorrichtung nach Anspruch 1, dadurch gekennzeichnet, daß die Büchse (2) an ihren beiden Stirnenden jeweils mit einem Stützkragen (7) ausgestattet ist.

3. Belastungsanzeigevorrichtung nach einem oder mehreren der vorhergehenden Ansprüche, dadurch gekennzeichnet, daß die Breite der Nut (4) einem Vielfachen ihrer Tiefe entspricht.

4. Belastungsanzeigevorrichtung nach einem oder mehreren der vorhergehenden Ansprüche, gekennzeichnet durch mehrere reihenförmig, in gleichmäßigem Abstand zueinander angeordnete Nuten (4).

5. Belastungsanzeigevorrichtung nach einem oder mehreren der vorhergehenden Ansprüche, dadurch gekennzeichnet, daß der Faltwiderstand der einzelnen Faltböden (5) zueinander unterschiedlich ist.

6. Belastungsanzeigevorrichtung nach einem oder mehreren der vorhergehenden Ansprüche, dadurch gekennzeichnet, daß die Nuten (4) unterschiedliche Tiefen aufweisen.

## Claims

1. Inspection nut screw joint with load indicator (1) to be arranged on anchors (10), particularly injection anchors for mining or the like, consisting of at least one clearance which is located at a convex surface (3) and which narrows and if occasion arises closes on exceeding a load limit exceeding the permitted anchor force, characterised in that the clearance is formed by several grooves (4) which are each provided with a folding bottom (5) and which are arranged in the peripheral wall (3) of a bush (2) associated with the nut (13) and extending at a distance from the outer surface of the anchor, and which, by a force resulting from rock movement, allow a sliding path of the anchor with continuous deformation.

2. Load indicator according to claim 1, characterised in that the bush (2) is provided with a support collar (7) at each of its two ends.

3. Load indicator according to one or more of the preceding claims, characterised in that the width of the groove (4) corresponds to a multiple of its depth.

4. Load indicator according to one or more of the preceding claims, characterised by several grooves (4) arranged in a row at uniform intervals from each other.

5. Load indicator according to one or more of the preceding claims, characterised in that the fold resistance of the individual folding bottoms (5) is different from each other.

6. Load indicator according to one or more of the preceding claims, characterised in that the grooves (4) have different depths.

## Revendications

1. Système de boulonnage à écrou de contrôle avec dispositif d'affichage de charge (1) pour montage sur des boulons d'ancrage (10), en particulier des ancrages à injection pour l'industrie minière ou similaire, le dispositif d'affichage de charge étant composé d'au moins un espace libre, agencé sur une surface externe (3) qui se restreint et, éventuellement, se referme, lors du dépassement d'une charge limite qui dépasse la force d'ancrage admissible, caractérisé en ce que l'espace libre est constitué d'une pluralité de rainures (4) qui sont munies chacune d'un fond de pliage (5), qui sont disposées dans la paroi d'enveloppe (3) d'un manchon (2) associé à l'écrou (13) et s'étendant, à distance de la surface d'enveloppe de l'ancrage,et qui par déformation continue en présence d'une force résultant du déplacement des terrains permettent un alignement glissant de l'ancrage.

2. Dispositif d'affichage de charge selon la revendication 1, caractérisé en ce que le manchon (2) est muni à chacune de ses extrémités frontales, d'un collet de support (7).

3. Dispositif d'affichage de charge selon une ou plusieurs des revendications précédentes, caractérisé en ce que la largeur de la rainure (4) correspond à un multiple de sa profondeur.

4. Dispositif d'affichage de charge selon une ou plusieurs des revendications précédentes, caractérisé par plusieurs rainures (4) disposées en série et uniformément espacées l'une par rapport à l'autre.

5. Dispositif d'affichage de charge selon une ou plusieurs des revendications précédentes, caractérisé en ce que les fonds de pliage individuels (5) présentent des résistances au pliage différentes l'un par rapport à l'autre.

6. Dispositif d'affichage de charge selon une ou plusieurs des revendications précédentes, caractérisé en ce que les rainures (4) présentent des profondeurs différentes.
